# EUROPÄISCHE PATENTSCHRIFT

(11) **EP 4 091 026 B1**
(45) Veröffentlichungstag und Bekanntmachung des Hinweises auf die Patenterteilung: **29.11.2023**
(21) Anmeldenummer: 21708152.0
(22) Anmeldetag: 18.02.2021
(51) Int. Cl.: G05B 19/042, G05B 23/02, G05B 19/418

(54) **VERFAHREN UND SYSTEM ZUR IDENTIFIZIERUNG EINER EINE ABLAUFSTÖRUNG VERURSACHENDEN AUTOMATISIERUNGSKOMPONENTE IN EINER VERKETTETEN AUTOMATISIERUNGSANORDNUNG**
METHOD AND SYSTEM FOR IDENTIFYING A PROCESS-DISRUPTING AUTOMATION COMPONENT IN A CONCATENATED AUTOMATION ASSEMBLY
PROCÉDÉ ET SYSTÈME D'IDENTIFICATION D'UN COMPOSANT D'AUTOMATISATION DE PERTURBATION DE PROCESSUS DANS UN ENSEMBLE D'AUTOMATISATION CONCATÉNÉ

(30) Priorität: 06.03.2020 EP 20161435
(43) Veröffentlichungstag der Anmeldung: 23.11.2022
(73) Patentinhaber: Siemens Aktiengesellschaft, 80333 München (DE)
(72) Erfinder: RIEDL, Wolfgang, 90408 Nürnberg (DE); GROSS, Ralf, 90471 Nürnberg (DE); KLOS, Hans-Henning, 91249 Weigendorf (DE); KOHLER, Benjamin, 90408 Nürnberg (DE); LAVRIK, Vladimir, 63303 Dreieich (DE); SCHNITTGER, Jens, 91475 Lonnerstadt (DE)
(74) Vertreter: Siemens Patent Attorneys
(86) Internationale Anmeldenummer: PCT/EP2021/053956
(87) Internationale Veröffentlichungsnummer: WO 2021/175604

(56) Entgegenhaltungen:
- WO-A2-2005/093530
- DE-A1- 10 254 009

## Beschreibung

Moderne industrielle Automatisierungsanordnungen, insbesondere Produktionsanlagen (z.B. Abfüllanlagen in der Getränke- bzw. Lebensmittelindustrie), Fertigungsanlagen oder Prozesstechnische Anlagen, zeichnen sich durch eine komplexe Anlagenstruktur mit einer Vielzahl von verketteten Arbeitsstationen oder Modulen aus. Die Arbeitsstationen oder Module werden regelmäßig durch eine speicherprogrammierbare Steuerung gesteuert. Im Folgenden soll eine solche Station oder Modul mitsamt ihrer Steuerung kurz als Automatisierungskomponente bezeichnet werden.

In solchen Anlagen kann es vorkommen, dass es zur Produktionszeit zu Störungen am durchsatzbegrenzenden Hauptaggregat ("Bottleneck", "Bottleneck-Komponente", "Bottleneck Aggregat") kommt, deren Ursache nicht unmittelbar ersichtlich ist, weil sie nicht im Hauptaggregat selbst liegt. Dieses Bottleneck-Aggregat bestimmt die Effizienz der Gesamtanlage. Stillstände am Bottleneck führen somit zu einem Effizienzverlust. Um die tatsächlich verantwortlichen Komponenten für einen Effizienzverlust sichtbar zu machen und damit potenzielle Maßnahmen zur Effizienzsteigerung identifizieren zu können, wird eine Ursachenermittlung, eine sog. "Root-Cause-Analyse" oder kurz "RCA", der Gesamtanlage durchgeführt. Hierbei wird die ursächliche Störung ermittelt, die zum Ausfall der Anlage geführt hat. Zur Ausführung dieser Analyse ist zum einen allgemeines Wissen zur Anlagenstruktur sowie zum anderen Wissen zu dem Verhalten der vorhandenen Komponenten erforderlich (z.B. Durchsätze, An- /Abschaltverhalten). Dieses allgemeine Wissen muss modelliert und einer RCA zur Ausführung zur Verfügung gestellt werden. Zum anderen wird die aktuelle Zustandshistorie der an der zu analysierenden Störung des Hauptaggregats beteiligten Automatisierungskomponenten, soweit diese vorhanden ist, benötigt. Im Kontext dieser RCA kann auch präventiv eine sogenannte Early Warning (EW) Analyse durchgeführt werden. Ziel dieser "EW"-Analyse ist es, vorherzusagen, bis zu welchem Zeitpunkt ein Komponentenstillstand behoben werden muss, so dass er sich nicht negativ auf das Bottleneck auswirkt. Hierfür ist ebenso eine, i.A. manuelle, Modellierung der Anlagenstruktur sowie des Komponentenverhaltens erforderlich.

Bisher muss eine Anlage zunächst digital modelliert werden, d.h. alle Maschinen (Automatisierungskomponenten bestehend aus der Steuerung und den gesteuerten mechatronischen Komponenten) und die Verbindungen zwischen ihnen müssen in einem Software-Werkzeug wie z.B. Tecnomatix Plant Simulation angelegt werden. Zusätzlich müssen alle relevanten Kennzahlen aller beteiligten Maschinen hinterlegt werden (z.B. Ausstoß pro Minute, Anlaufzeiten, Leerzeiten). Dies kann eine sehr beträchtliche Menge an Daten bedeuten, die oftmals nicht einmal vom Maschinenbauer angegeben werden oder gar nicht angegeben werden können, weil sie kontextabhängig sind (z.B. vom aktuell zu fertigendem Produkt abhängen) und händisch gemessen werden müssen. In der Modellierung muss stets wegen in der Realität existierender Schwankungen eine gewisse Unschärfe (Min/Max-Werte) berücksichtigt werden. Ist die Anlage final modelliert, kann auf einem externen Rechner, welcher Daten von allen Maschinen empfangen können muss, eine RCA durchgeführt werden. Möglich ist dies beispielsweise mit einem übergeordneten SCADA System (Supervisory Control and Data Aquisition), wenn folgende Voraussetzungen erfüllt sind: 1. Die erstellte Modellierung der Anlage ist sowohl bezüglich Struktur als auch bzgl. relevanter Kennzahlen aktuell. 2. Alle relevanten dynamischen Daten sind dem SCADA System durchgehend zugänglich. D.h. alle meldenden Komponenten/Aggregate müssen Informationen in einem geeigneten Format durchgängig zur Verfügung stellen.

Die Druckschrift WO 2005093530 A2 - Danz et al. "MODULARE MASCHINE UND ENTSPRECHENDES VERFAHREN ZUM DYNAMISCHEN KONFIGURIEREN DER TOPOLOGIE DIESER MASCHINE" zeigt ein Verfahren zum Auffinden benachbarter Maschinen in einer verteilten Topologie zur Konfigurierung von Kommunikationsbeziehungen.

Die Veröffentlichung DE 102 54 009 A1 - Heinemann "Verfahren und Datennetzwerk zur automatischen Konfiguration von Regelungen und Steuerungen von Werkzeug- oder Produktionsmaschinen" beschreibt ein automatisches Konfigurierungsverfahren von Maschinen, wobei eine automatische Ermittlung der Maschinentopologie durchgeführt wird.

Ein Problem besteht dann, wenn eine RCA ad hoc in einer neu konfigurierten bzw. noch nicht vollständig modellierten Automatisierungsanordnung durchgeführt werden soll. Ein weiteres Problem besteht dann, wenn eine Anlage häufig umkonfiguriert wird, insbesondere dann, wenn wechselweise verschiedene Produkte hergestellt werden sollen.

Es ist daher eine Aufgabe der Erfindung, eine Bestimmung der Fehlerursache, also eine Root Cause Analysis (RCA), auf eine einfache Weise in einem Umfeld mit dynamischer Struktur einer Automatisierungsanordnung zu ermöglichen.

Eine Kernidee der erfindungsgemäßen Lösung dieser Aufgabe besteht darin, dass die RCA direkt auf oder in den Automatisierungskomponenten der zu analysierenden Anlage (Automatisierungsanordnung) ausgeführt wird. Dazu ist es erforderlich, dass sich die Anlagenstruktur dynamisch selbst findet und dass die Berechnung der RCA dezentral auf den verketteten Maschinen (Automatisierungskomponenten bzw. deren Steuerungen) stattfindet. Die dafür notwendigen Daten (Zustandsinformationen, Konfigurationsparameter für die Analyse) der jeweiligen Komponenten können dazu laufend aktualisiert werden. Dazu ist wünschenswert, dass die Komplexität für den Anwender der Analyse reduziert wird, indem der Konfigurationsaufwand verringert wird. Darüber hinaus wird durch die lokale Verarbeitung von lokal erfassten Daten die Anforderung an das Kommunikationssystem der Automatisierungsanordnung reduziert und der Bedarf einer übergeordneten Ausführungs- und Koordinationseinheit für die Analyse entfällt.

Die Lösung der Aufgabe ist in den Patentansprüchen angegeben. Dabei zeigt Patentanspruch 1 ein erfindungsgemäßes Verfahren und Patentanspruch 10 eine erfindungsgemäße Automatisierungskomponente.

Die Lösung der Aufgabe sieht ein Verfahren zur Identifizierung einer eine Ablaufstörung verursachenden Automatisierungskomponente in einer industriellen Automatisierungsanordnung mit einer Mehrzahl verketteter Automatisierungskomponenten vor, wobei eine Ablaufstörung in einer ersten der Automatisierungskomponenten festgestellt und dort durch eine erste lokale Analyseeinrichtung untersucht wird. Dabei wird in einem ersten Schritt von jeder Automatisierungskomponente zumindest eine in der Verkettung vorangehende und/oder zumindest eine in der Verkettung nachfolgende Automatisierungskomponente bestimmt, in einem zweiten Schritt wird von der ersten Automatisierungskomponente eine Abfragemeldung zu zumindest einer zweiten, abhängig von der Art der Ablaufstörung in der Verkettung vorangegangenen oder nachfolgenden, Automatisierungskomponente versendet, und in einem dritten Schritt wird durch eine lokale Analyseeinrichtung der zweiten Automatisierungskomponente anhand lokal gespeicherter oder gemessener Kennzahlen entschieden, ob diese zweite Automatisierungskomponente ursächlich für die Ablaufstörung ist. Dabei wird im positiven Fall in einem vierten Schritt eine Antwortmeldung an die erste Automatisierungskomponente versendet, und im negativen Fall in einem fünften Schritt in rekursiver Weise durch die zweite Automatisierungskomponente dieselbe oder eine weitere Abfragemeldung zu zumindest einer der zweiten Automatisierungskomponente vorangehenden oder nachfolgenden dritten Automatisierungskomponente versendet und dort in analoger Weise bearbeitet, wobei in einem sechsten Schritt jeweils eine durch eine Automatisierungskomponente empfangene Antwortmeldung an diejenige Automatisierungskomponente weitergeleitet wird, von der die die Antwortmeldung empfangende Automatisierungskomponente die zugehörige Abfragemeldung empfangen hatte, und wobei in einem siebten Schritt die die Antwortmeldung endgültig empfangende erste Automatisierungskomponente anhand des Inhalts der Antwortmeldung eine Information über die für die Ablaufstörung ursächliche Automatisierungskomponente bereitstellt oder ausgibt. Das Verfahren leitet also so lange Abfragenachrichten weiter, bis eine für die Störung ursächliche Automatisierungskomponente eine Antwortnachricht auf demselben Weg zurückschickt. Dadurch ist eine dezentrale Fehleranalyse auch unter einer sich ändernden Anlagentopologie ohne neue Projektierung möglich.

Die Aufgabe wird außerdem durch ein System mit einer Anzahl zur Ausführung des Verfahrens eingerichteter Automatisierungskomponenten für den Betrieb in einer industriellen Automatisierungsanordnung mit einer Mehrzahl verketteter Automatisierungskomponenten gelöst, wobei die oder jede Automatisierungskomponente eine Analyseeinrichtung aufweist, wobei die Analyseeinrichtung dazu eingerichtet ist, zumindest eine in der Verkettung vorangehende und/oder zumindest eine in der Verkettung nachfolgende Automatisierungskomponente zu bestimmen, eine Abfragemeldung zu zumindest einer zweiten, abhängig von der Art der Ablaufstörung in der Verkettung vorangegangenen oder nachfolgenden, Automatisierungskomponente zu versenden, und im Falle einer empfangenen Abfragemeldung durch die Analyseeinrichtung anhand lokal gespeicherter oder gemessener Kennzahlen zu entscheiden, ob diese Automatisierungskomponente ursächlich für die Ablaufstörung ist. Dabei soll die Automatisierungskomponente dazu eingerichtet sein, im positiven Fall eine Antwortmeldung an die abfragende Automatisierungskomponente zu versenden, und im negativen Fall dieselbe oder eine weitere Abfragemeldung zu zumindest eine andere ihr vorangehende oder nachfolgende Automatisierungskomponente weiterzuleiten, und jeweils eine empfangene Antwortmeldung an diejenige Automatisierungskomponente weiterzuleiten, von der die Automatisierungskomponente eine zugehörige Abfragemeldung empfangen hatte. In dem Fall, in dem sie die ursprüngliche Versenderin der Abfragemeldung war, soll sie anhand des Inhalts der zugehörigen Antwortmeldung eine Information über die für die Ablaufstörung ursächliche der Automatisierungskomponenten bereitstellen oder ausgeben. Durch den Einsatz derart ausgestalteter Automatisierungskomponenten können die bereits anhand des Verfahrens diskutierten Vorteile erreicht werden.

Vorteilhafte Ausgestaltungen der Erfindung sind in den abhängigen Patentansprüchen angegeben. Die dabei beschriebenen Merkmale und deren Vorteile gelten sowohl für das Verfahren, als auch sinngemäß für die erfindungsgemäße Automatisierungskomponente. Vorteilhafte Varianten können sowohl einzeln, als auch in sinnfälliger Kombination miteinander realisiert werden.

Vorteilhaft wird als die erste Automatisierungskomponente eine solche der Automatisierungskomponente bestimmt, deren Performance für die Performance der gesamten Automatisierungsanordnung bestimmend oder begrenzend ist ("Bottleneck"; "Bottleneck-Komponente"; "BN"). Diese Automatisierungskomponente kann meist als erste eine Störung feststellen und kann damit als erstes den Analyseprozess auslösen. Die Auswahl als erste Automatisierungskomponente kann manuell durch Administration erfolgen. Vorteilhaft bestimmt sich eine solche Komponente selbst, beispielsweise anhand einer Maschinenart (z.b. Abfüllaggregat in der Getränkeindustrie). Eine weitere Möglichkeit besteht darin, dass eine oder jede Automatisierungskomponente mittels einer Token-basiert im Netzwerk weitergeleiteten Abfragenachricht die Leistungskennzahlen, z.B. Durchsatz pro Stunde, aller Automatisierungskomponenten abfragt und automatisch diejenige der Automatisierungskomponenten mit der kleinsten Leistungskennzahl ausgewählt wird. Es ist auch möglich, dass in einem Anlagenverbund mehrere Bottleneck-Komponenten definiert sind. Es kann beispielsweise auch festgelegt sein, dass als Default-wert die letzte Komponente "downstream" diese Rolle übernimmt.

Zur einfachen Strukturanalyse kann in dem ersten Schritt die vorangehende und/oder die nachfolgende Automatisierungskomponente anhand von Datenkanälen zu benachbarten Automatisierungskomponenten oder anhand von Materialeingangs- und/oder Materialausgangsschnittstellen dieser Automatisierungskomponente bestimmt werden.

Alternativ oder zusätzlich kann in dem ersten Schritt die vorangehende und/oder die nachfolgende Automatisierungskomponente anhand eines durch die Automatisierungsanordnung durchlaufenden Testkörpers bestimmt werden. Dabei kann der Testkörper die durchlaufenen Stationen und damit Automatisierungskomponenten aufzeichnen. Es ist auch möglich, dass die Automatisierungskomponenten die Anwesenheit des Testkörpers registrieren und mit einem Zeitstempel jeweils dokumentieren. In der letztgenannten Variante ist eine Kommunikation der Automatisierungskomponenten zur Ableitung der Topologie notwendig. In der erstgenannten Variante müssen die vom Testkörper aufgezeichneten Informationen letztlich im Netz bereitgestellt bzw. an die Automatisierungskomponenten übermittelt werden.

Vorteilhaft werden in dem Fall einer Verzweigung, in dem mehrere Automatisierungskomponente in der Verkettung vorangehen oder nachfolgen, in dem zweiten Schritt mehrere parallele Abfragemeldungen versendet, wobei die entsprechenden mehreren Antwortmeldungen in der die parallelen Abfragemeldungen versendenden Automatisierungskomponente zu einer gemeinsamen Antwortmeldung zusammengeführt werden. Somit können auch verzweigte Automatisierungsanordnungen bzw. -netze analysiert werden.

In dem Fall, in dem die Abfragemeldung eine letzte der Automatisierungskomponenten in der Verkettung erreicht, wird diese mit einer Antwortmeldung in entgegengesetzter Richtung der Verkettung beantwortet.

Vorteilhaft versendet eine lokale Analyseeinrichtung einer der Automatisierungskomponenten in dem Fall, in dem anhand der lokalen Kennzahlen eine Verursachung einer Ablaufstörung für die Zukunft absehbar ist, eine Frühwarnmeldung an zumindest eine der benachbarten der Automatisierungskomponente. Diese wird vorteilhaft bis zur Bottleneck-Komponente oder einer anderen ausgewählten Automatisierungskomponente weitergeleitet und von dieser publiziert oder anderweitig verarbeitet.

Die Abfragemeldungen und die Antwortmeldungen umfassen vorteilhaft zumindest im Falle von Verzweigungen jeweils ein eindeutiges Token. Alternativ oder zusätzlich kann auch mit eindeutigen ID's (z.B. der ersten Automatisierungskomponente) und/oder Zeitstempeln gearbeitet werden. Zeitstempel gestatten auch die Berücksichtigung verloren gegangener Nachrichten mittels einer Timeout-Regelung.

Vorzugsweise wird im Falle einer Änderung der Topologie der industriellen Automatisierungsanordnung zumindest der erste Schritt auf jeder der Automatisierungskomponenten erneut ausgeführt. Das kann auch für jeden Neustart einer Anlage vorgesehen sein.

Ein Ausführungsbeispiel des erfindungsgemäßen Verfahrens wird nachfolgend anhand der Zeichnung erläutert. Es dient gleichzeitig der Erläuterung einer erfindungsgemäßen Automatisierungskomponente.

Dabei zeigen:
- Figur 1: den Stand der Technik mit einer zentralen Fehleranalyse,
- Figur 2: die schematische Darstellung einer industriellen Automatisierungsanordnung mit verketteten Automatisierungskomponenten, und
- Figur 3: ausgehend von einem Bottleneck-Aggregat die Propagierung von Abfrage- und Antwortnachrichten in der Anordnung gemäß Figur 2.

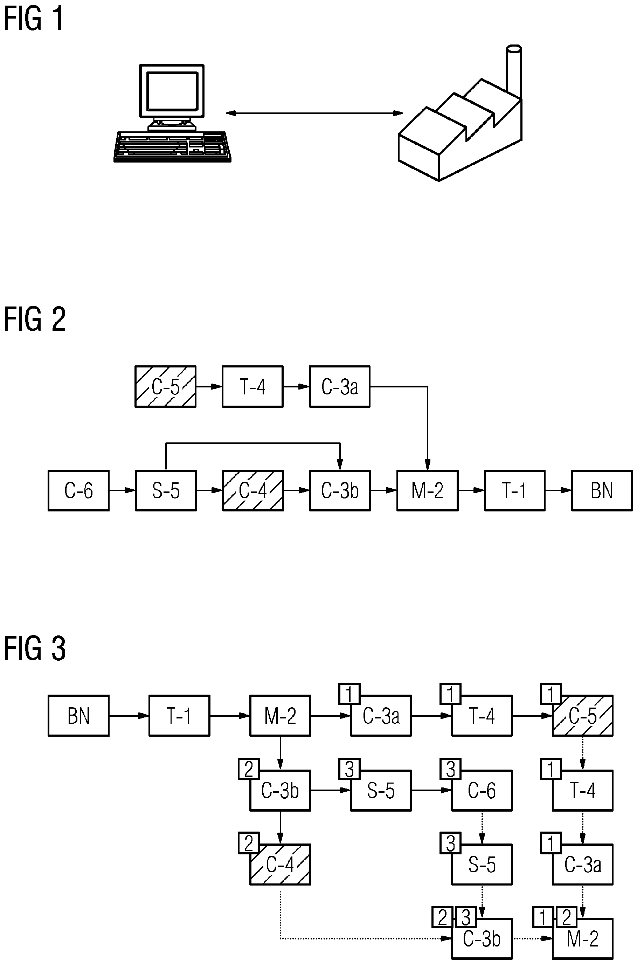

In der Figur 1 ist schematisch eine klassische Anordnung zur Fehleranalyse gezeigt, wobei ein Rechner für die Fehleranalyse (in der Darstellung links) mit einem Datennetzwerk einer verteilten industriellen Automatisierungsanordnung (im Bild rechts gezeigt) verbunden ist. Dabei ist im Stand der Technik vorgesehen, dass der Rechner alle Zustands- und Betriebsinformationen der einzelnen Automatisierungskomponenten (nicht einzeln dargestellt) erfasst und anhand dieser Daten die Ursache für eine Störung ermittelt und ausgibt oder meldet (mittels Alarmen, über HMI-Geräte oder dgl.).

Die Figur 2 zeigt strukturell eine Automatisierungsanordnung, beispielsweise eine Abfüllanlage. Die Pfeile bedeuten Materialflüsse. Das Bottleneck BN ist diejenige Komponente, die für die Anlagenleistung begrenzend ist, beispielsweise eine Verpackungseinrichtung. Im Vorlauf und/oder (nicht dargestellt) im Nachgang zum Bottleneck BN sind weitere Automatisierungskomponenten angeordnet, beispielsweise Transportbänder T-1, T-4, Einheiten zur Materialzusammenführung M-2 ("Merge"), Einheiten zur Auftrennung des Materialflusses S-5 ("Split") und allgemeine Aggregate C-3a, C-3b, C-4, C-5. Es liegt im gezeigten Beispielfall eine Starvation, d.h. ein Materialmangel, am Bottleneck BN vor. Die Zahlen an den Bezugszeichen zeigen an, wie weit in Richtung "Upstream" (Materialstrom aufwärts) die Automatisierungskomponenten oder allgemein Elemente relativ zum Bottleneck BN liegen.

Als Gründe für den Stillstand einer Komponente kommen grundsätzlich in Frage ein technisches Problem (Eigenfehler), Materialmangel beim zuströmenden Material (starvation) oder ein blockierter Materialausstoss (tailback). Zudem gibt es Komponenten, bei denen nur durch die Zusammenwirkung mehrerer externer Gegebenheiten eine Störung ohne Eigenfehler auftreten kann. Beispiele hierfür sind Materialzusammenführungen und Materialaufteilungen, in welchen teilweise auch eine externe Störung (Mangel, Stau) an zwei oder mehrerer Ein-/Ausgangsknoten "benötigt" wird, um einen Stillstand ohne Eigenstörung erklären zu können. Hieraus ergibt sich die Anforderung eines ,Gedächtnisses' zur Ausführung einer RCA, d.h., es ist nicht ausreichend, für alle angeschlossenen Komponenten eine unabhängige Analyse anzustoßen. Vielmehr muss eine Möglichkeit gefunden werden, die Ergebnisse aus der Analyse unterschiedlicher "Pfade" auch im Falle einer dezentralen Durchführung der RCA kombinieren zu können. Dies geschieht hier an derjenigen Komponente, an der Materialströme zusammenfließen im Falle einer "Starvation" bzw. sich Materialströme aufteilen im Falle eines "Tailback".

Zur automatischen Bestimmung der in der Figur 2 skizzierten Anlagenstruktur nutzen die miteinander im Materialfluss direkt verbundenen ("verketteten") Komponenten (z.B. Maschinen, Transportbänder, ...) die ihnen verfügbaren Kommunikationskanäle (Automatisierungs-Datennetzwerk), um einander ihre Existenz mitzuteilen. Hierfür haben alle Komponenten, welche in die Analyse integriert werden, eine Recheneinheit, die sowohl die Analyse ausführen, als auch die benötigten Kommunikationsschnittstellen bereitstellen kann. Als Recheneinheit oder "Plattform" können die bereits ohnehin in den einzelnen Stationen vorhandenen speicherprogrammierbaren Steuerungen oder aber auch separate Computer dienen. Zur Kommunikation kann jeweils eine bereits existierende Datenleitung oder eine für diesen Zweck eingeführte Kommunikationsverbindung dienen.

Im vorliegenden Beispiel erfolgt eine solche Selbstfindung über dafür eingerichtete Kommunikationskanäle. Dabei ist jeder Schnittstelle, über die Materialfluss erfolgt, eine Kommunikationsschnittstelle zugeordnet, die die am Materialfluss beteiligten Komponenten direkt miteinander verbindet. Damit ist jeder Komponente bekannt, mit welchen Komponenten sie in der Anlage materialflusstechnisch verbunden ist, und über welche Kommunikationsschnittstelle Anfragen an benachbarte Komponenten gestellt werden können. In einem alternativen Verfahren wird ein speziell markiertes Produkt (z.B. eine mit einem RFID-Tag versehene Flasche), welches von allen vorhandenen Komponenten erfasst werden kann, in den Materialfluss eingebracht. Sobald dieses Produkt bei einer Komponente ankommt, meldet diese Komponente in einem Broadcast an alle anderen Komponenten die Ankunft des markierten Produktes zusammen mit einer eindeutigen ID für die Komponente und ggf. einer Zeitinformation (Timestamp). Aus der Reihenfolge, in welcher die Ankunft des markierten Produktes von den Komponenten gemeldet wird, ergibt sich direkt die Anlagenstruktur bzgl. des Materialflusses, und jede Komponente kann die an sie angeschlossene Komponenten ermitteln.

Mit den beispielhaft beschriebenen Verfahren ist es auch möglich, dass jede Komponente ermittelt, in welcher Richtung, d.h. über welche direkt angeschlossene benachbarte Komponente, der Materialstrom das Bottleneck erreicht bzw. über welche benachbarte Komponente das Material abfliesst. Nach der Findungsphase existiert die logische Gesamtstruktur der Anlage in ausreichender Form für RCA sowie eine Fehlerprognose (Early Warning) implizit zwischen den beteiligten Maschinen; dieses Wissen wird auf den Automatisierungskomponenten verteilt gehalten. Ändert sich die Anlagenstruktur im laufenden Betrieb, so muss kein neues Anlagenmodell erstellt werden, es findet eine automatische Aktualisierung mit Hilfe desselben Mechanismus, mit dem das ursprüngliche Anlagenmodell generiert wurde, statt.

Die RCA-Berechnung basiert wesentlich auf der Verarbeitung von Zustandsinformationen der Maschinen der Produktionsanlage, z.B. Maschine arbeitet normal, hat einen technischen Defekt, steht wegen fehlenden Eingangsmaterials (starvation) oder steht wegen blockierten Ausgangskanals (tailback). Allgemeiner können auch andere Maschinenkennzahlen (z.B. Durchsatz) mitberücksichtigt werden. Diese können im Einzelfall auch Stammdaten sein (etwa die Anlaufzeit nach einem Stillstand), insbesondere dann, wenn noch keine Messungen dafür zur Verfügung stehen. Im dargestellten Konzept einer dezentralen Realisierung der RCA-Berechnung findet auch die Haltung aller Daten vorzugsweise lokal auf den Maschinen statt.

Jede Maschine soll sich ihre Zustandshistorie für einen gewissen Zeitraum "merken". Da es nicht zwingend eine externe Datenbank oder einen externen, zentralen Rechner gibt, welcher für die Berechnung zuständig ist, müssen alle für die Berechnung notwendigen Daten in den Maschinen bzw. den lokalen Recheneinheiten gehalten und aktualisiert werden.

Ausgangslage für eine RCA ist immer der Stillstand des/eines Bottleneck-Aggregats. Da die Maschine selbst weiß, aus welcher Richtung (Material-Zulauf oder -Ablauf; starvation oder tailback) das Problem stammt, weiß sie, welche Maschine oder im Falle von Verzweigungen- Maschinen sie "ansprechen" muss, um letztendlich bei der verursachenden Maschine anzukommen.

Ein Beispiel für den resultierenden Meldungsverkehr ist in der Figur 3 angegeben. Das Beispiel bezieht sich auf die in der Figur 2 dargestellte Struktur.

Da ein Kommunikationsweg gegeben ist (aus der Bestimmung der Anlagenstruktur), kann das Bottleneck BN sich im Materialmangelfall an die Maschine (hier: Transportband) T-1 ("upstream", also entgegen des Materialflussweges) wenden, ihr ihre für diesen Fall relevanten eigenen, aktuellen Kennzahlen mitgeben und ihr die Verantwortung übergeben, alle notwendigen weiteren Schritte einzuleiten.

In der Komponente T-1 wird dann überprüft, ob es in einem Zeitfenster, welches sich aus den eigenen Kennzahlen sowie ggf. den Kennzahlen der Vorgängerkomponente ergibt, Eigenstörungen gab, welche den Bottleneck-Stillstand verursachten. Also beispielsweise ein Stillstand des Transportbandes innerhalb der letzten 60 Sekunden von einer Dauer > 5 Sekunden.

Falls nicht, wird sich die Komponente T-1 an die Komponente M-2 wenden usw. Letztendlich wird wie bei herkömmlicher RCA die den Bottleneck-Stillstand verursachende Maschine identifiziert werden können und auf der Anlage durch entsprechende Mittel dargestellt. Denkbar sind hierbei sog. SCADA-Datenpunkte, HMI-Panel, Warnleuchten etc. Entscheidend ist, dass sich alle Kennzahlen lediglich in den Maschinen selbst befinden müssen und jede Berechnung in den Maschinen selbst geschieht.

Im vorliegenden Beispiel sei nun angenommen, dass die Komponenten C-5 und C-4 für den Bottleneck-Stillstand verantwortlich sind, wobei beide in getrennten Zweigen der Anlage im Vorlauf der Komponente M-2 jeweils ihre Nennleistung nicht erbringen und in Summe nicht genügend Durchsatz zur Versorgung des Bottlenecks BN mit Material haben.

In der Figur 3 sind für die dezentrale RCA die Wege der Suchmeldungen (durchgezogene Pfeile) und der zugehörigen Ergebnisrückmeldungen (gepunktete Pfeile) darstellt. Die Nachrichten bestehen jeweils aus einem eindeutigen Token mit einem Ergebnis; es ist dabei gleichgültig, ob das Token auch Speicherplatz für Ergebnisse oder Zwischenergebnisse aufweist, oder ob diese Ergebnisse an das jeweilige Token angehangen werden. Bei Anlagen ohne Verzweigungen ist das Token selbst von minderer Bedeutung und kann im Einzelfall auch entfallen, jedoch ist in verzweigten Systemen das Token oder eine andere eindeutige Identifizierung wichtig, um Meldungen und deren Ergebnisse aus unterschiedlichen Zweigen zusammenzuführen.

In der Darstellung sind an den Komponenten links oben jeweils Zahlen 1,2 oder 3 vermerkt, die für eine eingehende Nachricht das mit dem Token jeweils verknüpfte Ergebnis verdeutlichen. Während in der Praxis das jeweilige Ergebnis i.d.R. auch konkrete Leistungskennzahlen und deren Ursprung beschreibt, beispielsweise "C-6: Throughput; 80% - 1000 per hour; failure: neg.", wobei hier in der Praxis anstelle oder zusätzlich zu der relativen Position "C-6" eine absolute Identifikation enthalten wäre, wird im Rahmen des hier gezeigten Beispiels zur Vereinfachung nur zwischen 3 Stati unterschieden: 1: "Token mit nicht definiertem Ergebnis"; 2: "Token mit Ergebnis: Strang ist mindestens teilverantwortlich"; 3: "Token mit Ergebnis: Strang trägt keine Verantwortung".

In jeder Komponente liegt anhand der eigenen Topologieuntersuchungen das Wissen über benachbarte Komponenten vor und somit auch die Information darüber, welche angeschlossenen Komponenten für den aktuellen Bottleneck-Stillstand zu befragen sind. Komponenten, welche mehrere Stränge verfolgen müssen, geben diesen ein "Token" mit. Diese Tokens enthalten folgende Informationen: - Token ID (eindeutiger Zahlenwert, z.B. GUID - Geräte-Identifizierungsnummer) - Aktueller Suchzustand (im gezeichneten Zustand wäre bei M-2 die Starvation des Bottlenecks hier durchgereicht worden) - Platz für Antwort eines Folgeaggregats. Findet sich, in unserem Fall von M-2 upstream (also entgegen der Materialflussrichtung), ein Aggregat, welches die Starvation von wenigstem einem der beiden Stränge erklären kann, so trägt es sich an dieser Stelle mit eindeutiger ID ein. Der "Merge", also die Komponente, in der der Zusammenfluss der getrennten Materialflüsse erfolgt, kann dann entscheiden, ob alle Stränge den Zustand, der anliegt, erklären, und kann daraus folgern, ob ein oder mehrere Aggregate, welche eine entsprechende Rückmeldung gegeben haben, valide Root Cause Kandidaten sind.

In der Figur 3 ist der Meldungsverlauf dargestellt. Der Meldungsweg der Token in Suchrichtung ist dabei mit durchgezogenen Pfeilen gekennzeichnet, während der Weg der Rückmeldungen mit gepunkteten Pfeilen visualisiert ist.

Der Ablauf der Suche im gezeigten Beispiel ist folgender: Bis zur Komponente M-2 läuft die Suche linear, es sind keine Token erforderlich. Die Komponente M-2 hat als Anforderung, dass beide Pfade gestört sein müssen, um eine Störung an Komponente M-2 zu erklären. Daher erzeugt die Komponente M-2 für die zwei folgenden Pfade unabhängige Token, um später prüfen zu können, ob die Summe der Ergebnisse eine Störung erklären kann. Der Token mit dem Bezugszeichen 1 (links oben an der Komponente dargestellt) wird linear bis C-5 weitergegeben, an dieser Komponente liegt eine Eigenstörung vor.

Das Ergebnis wird auf demselben Weg wieder an die Komponente M-2 zurückgeleitet. Der Token mit dem Bezugszeichen 2 erreicht zunächst die Komponente C-3b; dieser Vorgang findet parallel zur Versendung des ersten Tokens 1 statt. Diese Komponente C-3b ist zwar über den Split S-5 mit zwei Komponenten C-4, S-5 verbunden, es reicht ihr aber zumindest ein gestörter Pfad als Erklärung. Ein neuer Token 3 wird erzeugt und über Komponente S-5 an Komponente C-6 geleitet. An Komponente C-6 liegt keine Störung vor. Nachdem die Komponente C-6 die letzte Komponente ist, wird der Token 3 als nicht verantwortlich markiert und an Komponente C-3b zurückgeleitet. Parallel wird der Token 2 an die Komponente C-4 geleitet. Dort liegt eine Eigenstörung vor. Dies wird im Token 2 bzw. der damit markierten Nachricht vermerkt und die Nachricht mit diesem Token an die Komponente C-3b geleitet. An Komponente C-3b wird festgestellt, dass mindestens ein Strang gestört ist (C-4, mitgeteilt mit Token 2) und dieses Ergebnis an die Komponente M-2 geleitet. Die beiden Token 1 und 2 bzw. die damit weitergeleiteten Nachrichten erklären zumindest in Summe den Stillstand, weil beispielsweise aus den Meldungen der beiden Zweigen hervorgeht, dass in Summe die erforderliche Materialmenge nicht gefördert wird. Die mit den Token vermerkten Komponenten sind als "Root Causes", also Verursacher der Störung, anzusehen.

Die für das beschriebene Verfahren benötigten Funktionen und deren Basis-Parameter können z.B. als PLC-Funktionsbaustein in den Aggregaten bzw. Komponenten jeweils projektiert werden, also schon zum Zeitpunkt der Projektierung der Anlage vorgesehen werden.

Eine Fehlerprognose, sog. Early Warning, ist durch das hier beschriebene Verfahren ebenfalls möglich, es wird lediglich nicht vom Bottleneck BN angestoßen, sondern von allen anderen Aggregaten bzw. Komponenten, die einen Eigenfehler feststellen. Durch das dynamische "Selbstfinden" der Anlagenstruktur weiß im Idealfall jedes Aggregat, in welcher Flussrichtung sich das Bottleneck, also das für den Durchsatz kritische Aggregat, befindet, und damit auch, in welche Richtung die Early Warning-Analyse laufen muss. Sollte dieses Wissen aus irgendwelchen Gründen nicht vorliegen, kann eine Maschine, die in den Stillstand wechselt oder wechseln wird, diese Tatsache auch in alle Flussrichtungen melden.

Im Vergleich zu einer konventionellen Ausführung der RCA (zentral) wird die Algorithmik nun verteilt auf mehreren Recheneinheiten ausgeführt. Durch das vorgestellte Verfahren zur dezentralen Koordination der Topologiebestimmung sowie Ausführung der eigentlichen RCA-Algorithmik (inkl. Early Warning) ergeben sich folgende Vorteile, nämlich ein "Plug&Play" der RCA (also eine Selbstkonfigurierung)und die Möglichkeit einer Frühwarnung (EW - Early Warning).

Durch die dynamische Selbstfindung der Komponenten der Anlage ist ein manuelles Modellieren der Anlagenstruktur nicht mehr notwendig. Dadurch kann die RCA sofort eingesetzt werden. Bei dynamischer Umkonfiguration der Anlage (z.B. durch Umstellen, Hinzufügen oder Entfernen einer Komponente) kann das gewählte Verfahren zur Selbstfindung der Anlagenstruktur lokal erneut ausgeführt werden. Hierdurch ist die RCA sofort nach der Umkonfiguration erneut einsatzbereit.

Die Auswertung der für die RCA relevanten Daten kann lokal auf oder nahe (datentechnisch oder räumlich nahe) bei den Komponenten erfolgen. Hier stehen sämtliche komponentenspezifischen Daten zur Verfügung. Es besteht keine Notwendigkeit, diese Daten (z.B. kontinuierliche Flussdaten) an ein übergeordnetes System zu melden. Mit hinzugefügten Komponenten erfolgt automatisch und linear die Erweiterung der verfügbaren Rechenleistung und des Speichervermögens, welche insgesamt für die Analysen notwendig sind. Das heißt, dass die RCA automatisch mit einem Wachstum einer Automatisierungsanordnung mit-skaliert.

## Patentansprüche

1. Verfahren zur Identifizierung einer eine Ablaufstörung verursachenden Automatisierungskomponente (BN, ..., C-6) in einer industriellen Automatisierungsanordnung mit einer Mehrzahl verketteter Automatisierungskomponenten (BN, ..., C-6),
wobei eine Ablaufstörung in einer ersten der Automatisierungskomponenten (BN) festgestellt und dort durch eine erste lokale Analyseeinrichtung untersucht wird, **dadurch gekennzeichnet,**
**dass** in einem ersten Schritt von jeder Automatisierungskomponente (BN, ..., C-6) zumindest eine in der Verkettung vorangehende und/oder zumindest eine in der Verkettung nachfolgende Automatisierungskomponente (BN, ..., C-6) bestimmt wird,
**dass** in einem zweiten Schritt von der ersten Automatisierungskomponente (BN) eine Abfragemeldung zu zumindest einer zweiten, abhängig von der Art der Ablaufstörung in der Verkettung vorangegangenen oder nachfolgenden, Automatisierungskomponente (BN, ..., C-6) versendet wird, dass in einem dritten Schritt durch eine lokale Analyseeinrichtung der zweiten Automatisierungskomponente (BN, ..., C-6) anhand lokal gespeicherter oder gemessener Kennzahlen entschieden wird, ob diese zweite Automatisierungskomponente (BN, ..., C-6) ursächlich für die Ablaufstörung ist, wobei im positiven Fall in einem vierten Schritt eine Antwortmeldung an die erste Automatisierungskomponente (BN) versendet wird, und wobei im negativen Fall
in einem fünften Schritt in rekursiver Weise durch die zweite Automatisierungskomponente (BN, ..., C-6) dieselbe oder eine weitere Abfragemeldung zu zumindest einer der zweiten Automatisierungskomponente (BN, ..., C-6) vorangehenden oder nachfolgenden dritten Automatisierungskomponente (BN, ..., C-6) versendet und dort in analoger Weise bearbeitet wird,
**dass** in einem sechsten Schritt jeweils eine durch eine Automatisierungskomponente (BN, ..., C-6) empfangene Antwortmeldung an diejenige Automatisierungskomponente (BN, ..., C-6) weitergeleitet wird, von der die die Antwortmeldung empfangende Automatisierungskomponente (BN, ..., C-6) die zugehörige Abfragemeldung empfangen hatte, und
**dass** in einem siebten Schritt die die Antwortmeldung endgültig empfangende erste Automatisierungskomponente (BN) anhand des Inhalts der Antwortmeldung eine Information über die für die Ablaufstörung ursächliche Automatisierungskomponente (BN, ..., C-6) bereitstellt oder ausgibt.

2. Verfahren nach Patentanspruch 1,
**dadurch gekennzeichnet,**
**dass** als die erste Automatisierungskomponente (BN) eine solche der Automatisierungskomponenten (BN, ..., C-6) bestimmt wird, deren Performance für die Performance der gesamten Automatisierungsanordnung bestimmend oder begrenzend ist.

3. Verfahren nach einem der vorhergehenden Patentansprüche,
**dadurch gekennzeichnet,**
**dass** in dem ersten Schritt die vorangehende und/oder die nachfolgende Automatisierungskomponente (BN, ..., C-6) anhand von Datenkanälen oder anhand von Materialeingangs- und/oder Materialausgangsschnittstellen dieser Automatisierungskomponente (BN, ..., C-6) bestimmt werden.

4. Verfahren nach einem der vorhergehenden Patentansprüche,
**dadurch gekennzeichnet,**
**dass** in dem ersten Schritt die vorangehende und/oder die nachfolgende Automatisierungskomponente (BN, ..., C-6) anhand eines durch die Automatisierungsanordnung durchlaufenden Testkörpers bestimmt wird.

5. Verfahren nach einem der vorhergehenden Patentansprüche,
**dadurch gekennzeichnet,**
**dass** in dem Fall einer Verzweigung, in dem mehrere Automatisierungskomponente (BN, ..., C-6) in der Verkettung vorangehen oder nachfolgen, in dem zweiten Schritt mehrere parallele Abfragemeldungen versendet werden, und dass die entsprechenden mehreren Antwortmeldungen in der die parallelen Abfragemeldungen versendenden Automatisierungskomponente (BN, ..., C-6) zu einer gemeinsamen Antwortmeldung zusammengeführt werden.

6. Verfahren nach einem der vorhergehenden Patentansprüche, **dadurch gekennzeichnet, dass** in dem Fall, in dem die Abfragemeldung eine letzte der Automatisierungskomponenten (c-5, C-6) in der Verkettung erreicht, diese mit einer Antwortmeldung in entgegengesetzter Richtung der Verkettung beantwortet wird.

7. Verfahren nach einem der vorhergehenden Patentansprüche,
**dadurch gekennzeichnet,**
**dass** durch eine lokale Analyseeinrichtung einer der Automatisierungskomponenten (BN, ..., C-6) in dem Fall, in dem anhand der lokalen Kennzahlen eine Verursachung einer Ablaufstörung für die Zukunft absehbar ist, eine Frühwarnmeldung an zumindest eine der benachbarten der Automatisierungskomponente (BN, ..., C-6) versendet wird.

8. Verfahren nach einem der vorhergehenden Patentansprüche,
**dadurch gekennzeichnet,**
**dass** die Abfragemeldungen und die Antwortmeldungen zumindest im Falle von Verzweigungen jeweils ein eindeutiges Token umfassen.

9. Verfahren nach einem der vorhergehenden Patentansprüche,
**dadurch gekennzeichnet,**
**dass** im Falle einer Änderung der Topologie der industriellen Automatisierungsanordnung zumindest der erste Schritt auf jeder der Automatisierungskomponenten (BN, ..., C-6) erneut ausgeführt wird.

10. System mit einer Automatisierungskomponente (BN, ..., C-6) für den Betrieb in einer industriellen Automatisierungsanordnung mit einer Mehrzahl verketteter Automatisierungskomponenten (BN, ..., C-6),
**dadurch gekennzeichnet,**
**dass** die Automatisierungskomponente (BN, ..., C-6) eine Analyseeinrichtung aufweist, wobei die Analyseeinrichtung dazu eingerichtet ist,
- zumindest eine in der Verkettung vorangehende und/oder zumindest eine in der Verkettung nachfolgende Automatisierungskomponente (BN, ..., C-6) zu bestimmen,
- eine Abfragemeldung zu zumindest einer zweiten, abhängig von der Art der Ablaufstörung in der Verkettung vorangegangenen oder nachfolgenden, Automatisierungskomponente (BN, ..., C-6) zu versenden,
- im Falle einer empfangenen Abfragemeldung durch die Analyseeinrichtung anhand lokal gespeicherter oder gemessener Kennzahlen zu entscheiden, ob diese Automatisierungskomponente (BN, ..., C-6) ursächlich für die Ablaufstörung ist, wobei im positiven Fall eine Antwortmeldung an die abfragende Automatisierungskomponente (BN, ..., C-6) versendet wird, und wobei im negativen Fall die Automatisierungskomponente (BN, ..., C-6) dazu eingerichtet ist, dieselbe oder eine weitere Abfragemeldung zu zumindest eine andere ihr vorangehende oder nachfolgende Automatisierungskomponente (BN, ..., C-6) zu versenden,
- jeweils eine empfangene Antwortmeldung an diejenige Automatisierungskomponente (BN, ..., C-6) weiterzuleiten, von der die Automatisierungskomponente (BN, ..., C-6) eine zugehörige Abfragemeldung empfangen hatte, und
- in dem Fall, in dem sie die ursprüngliche Versenderin der Abfragemeldung war, anhand des Inhalts der zugehörigen Antwortmeldung eine Information über die für die Ablaufstörung ursächliche der Automatisierungskomponenten (BN, ..., C-6) bereitzustellen oder auszugeben.

## Claims

1. Method for identifying a process-disrupting automation component (BN, ..., C-6) in an industrial automation arrangement having a plurality of concatenated automation components (BN, ..., C-6),
wherein a process disruption is determined in a first of the automation components (BN) and is examined there by a first local analysis device,
**characterized**
**in that**, in a first step, each automation component (BN, ..., C-6) determines at least one automation component (BN, ..., C-6) arranged upstream in the concatenation and/or at least one automation component (BN, ..., C-6) arranged downstream in the concatenation,
**in that**, in a second step, the first automation component (BN) sends an interrogation message to at least one second automation component (BN, ..., C-6) that is arranged upstream or downstream in the concatenation depending on the type of process disruption,
**in that**, in a third step, a local analysis device of the second automation component (BN, ..., C-6) takes locally stored or measured key figures as a basis for deciding whether this second automation component (BN, ..., C-6) is the cause of the process disruption, wherein, if so,
in a fourth step, a response message is sent to the first automation component (BN), and wherein, if not,
in a fifth step, the same interrogation message or a further interrogation message is recursively sent by the second automation component (BN, ..., C-6) to at least one third automation component (BN, ..., C-6) arranged upstream or downstream of the second automation component (BN, ..., C-6) and is analogously processed there,
**in that**, in a sixth step, a response message received by an automation component (BN, ..., C-6) is respectively forwarded to that automation component (BN, ..., C-6) from which the automation component (BN, ..., C-6) receiving the response message received the associated interrogation message, and
**in that**, in a seventh step, the first automation component (BN) definitively receiving the response message provides or outputs, on the basis of the content of the response message, information relating to the automation component (BN, ..., C-6) that is the cause of the process disruption.

2. Method according to Patent Claim 1,
**characterized**
**in that** an automation component of the automation components (BN, ..., C-6), the performance of which determines or limits the performance of the entire automation arrangement, is determined as the first automation component (BN).

3. Method according to one of the preceding patent claims,
**characterized**
**in that**, in the first step, the automation component (BN, ..., C-6) arranged upstream and/or the automation component (BN, ..., C-6) arranged downstream is/are determined on the basis of data channels or on the basis of material input interfaces and/or material output interfaces of this automation component (BN, ..., C-6).

4. Method according to one of the preceding patent claims,
**characterized**
**in that**, in the first step, the automation component (BN, ..., C-6) arranged upstream and/or the automation component (BN, ..., C-6) arranged downstream is/are determined on the basis of a test body running through the automation arrangement.

5. Method according to one of the preceding patent claims,
**characterized**
**in that**, in the event of a branch in which a plurality of automation components (BN, ..., C-6) are arranged upstream or downstream in the concatenation, a plurality of parallel interrogation messages are sent in the second step, and in that the corresponding plurality of response messages are combined to form a common response message in the automation component (BN, ..., C-6) sending the parallel interrogation messages.

6. Method according to one of the preceding patent claims,
**characterized**
**in that**, if the interrogation message reaches a last one of the automation components (C-5, C-6) in the concatenation, this is responded to with a response message in the opposite direction of the concatenation.

7. Method according to one of the preceding patent claims,
**characterized**
**in that**, if a cause of a process disruption can be foreseen for the future on the basis of the local key figures, a local analysis device of one of the automation components (BN, ..., C-6) sends an early warning message to at least one of the adjacent automation components (BN, ..., C-6).

8. Method according to one of the preceding patent claims,
**characterized**
**in that** the interrogation messages and the response messages each comprise a unique token at least in the event of branches.

9. Method according to one of the preceding patent claims,
**characterized**
**in that**, if the topology of the industrial automation arrangement changes, at least the first step is carried out again on each of the automation components (BN, ..., C-6).

10. System having an automation component (BN, ..., C-6) for operation in an industrial automation arrangement having a plurality of concatenated automation components (BN, ..., C-6),
**characterized**
**in that** the automation component (BN, ..., C-6) has an analysis device, wherein the analysis device is configured
- to determine at least one automation component (BN, ..., C-6) arranged upstream in the concatenation and/or at least one automation component (BN, ..., C-6) arranged downstream in the concatenation,
- to send an interrogation message to at least one second automation component (BN, ..., C-6) that is arranged upstream or downstream in the concatenation depending on the type of process disruption,
- if the analysis device receives an interrogation message, to take locally stored or measured key figures as a basis for deciding whether this automation component (BN, ..., C-6) is the cause of the process disruption, wherein, if so, a response message is sent to the interrogating automation component (BN, ..., C-6), and wherein, if not, the automation component (BN, ..., C-6) is configured to send the same interrogation message or a further interrogation message to at least one other automation component (BN, ..., C-6) that is arranged upstream or downstream of it,
- to respectively forward a received response message to that automation component (BN, ..., C-6) from which the automation component (BN, ..., C-6) received an associated interrogation message, and
- if it was the original sender of the interrogation message, to provide or output, on the basis of the content of the associated response message, information relating to the automation component of the automation components (BN, ..., C-6) that is the cause of the process disruption.

## Revendications

1. Procédé d'identification d'un composant (BN, ..., C-6) d'automatisation provoquant une perturbation du déroulement dans un agencement d'automatisation industriel ayant une pluralité de composants (BN, ..., C-6) d'automatisation concaténés,
dans lequel on constate une perturbation du déroulement dans un premier des composants (BN) d'automatisation et on l'y étudie par un premier dispositif local d'analyse, **caractérisé**
**en ce que** dans un premier stade, on détermine par chaque composant (BN, ..., C-6) d'automatisation au moins un composant (BN, ..., C-6) d'automatisation précédant dans la concaténation et/ou suivant dans la concaténation,
**en ce que** dans un deuxième stade, on envoie par le premier composant (BN) d'automatisation un message de demande à au moins un deuxième composant (BN, ..., C-6) d'automatisation précédant ou suivant en fonction du type de perturbation du déroulement dans la concaténation,
**en ce que** dans un troisième stade, on décide par un dispositif local d'analyse du deuxième composant (BN, ..., C-6) d'automatisation à l'aide de nombres caractéristiques mémorisés ou mesurés si ce deuxième composant (BN, ..., C-6) d'automatisation est à l'origine de la perturbation du déroulement, dans lequel dans l'affirmative on envoie dans un quatrième stade un message de réponse au premier composant (BN) d'automatisation, et
dans lequel dans la négative, on utilise dans un cinquième stade de manière récurrente par le deuxième composant (BN, ..., C-6) d'automatisation le même ou un autre message de demande vers au moins l'un des troisièmes composants (BN, ..., C-6) d'automatisation précédant ou suivant le deuxième composant (BN, ..., C-6) d'automatisation et on l'y traite de la même manière,
**en ce que** dans un sixième stade, on achemine respectivement un message de réponse, reçu par un composant (BN, ..., C-6) d'automatisation, au composant (BN, ..., C-6) d'automatisation qui avait reçu le message de demande lui appartenant du composant (BN, ..., C-6) d'automatisation recevant le message de réponse et en ce que dans un septième stade, le premier composant (BN) d'automatisation recevant finalement le message de réponse, met à disposition ou émet à l'aide du contenu du message de réponse une information sur le composant (BN, ..., C-6) d'automatisation à l'origine de la perturbation du déroulement.

2. Procédé suivant la revendication 1,
**caractérisé**
**en ce que** l'on détermine comme premier composant (BN) d'automatisation un composant (BN, ..., C-6) d'automatisation tel que sa performance est déterminante ou limitante pour la performance de l'ensemble de l'agencement d'automatisation.

3. Procédé suivant l'une des revendications précédentes,
**caractérisé**
**en ce que** dans le premier stade, on détermine le composant (BN, ..., C-6) d'automatisation précédant et/ou suivant à l'aide de canaux de données ou à l'aide d'interfaces d'entrée matérielles et/ou d'interfaces de sortie matérielles de ce composant (BN, ..., C-6) d'automatisation.

4. Procédé suivant l'une des revendications précédentes,
**caractérisé**
**en ce que** dans le premier stade, on détermine le composant (BN, ..., C-6) d'automatisation précédant et/ou suivant à l'aide d'un corps de test parcourant l'agencement d'automatisation.

5. Procédé suivant l'une des revendications précédentes,
**caractérisé**
**en ce que** dans le cas d'une bifurcation, dans lequel plusieurs composants (BN, ..., C-6) d'automatisation précédent ou suivent dans la concaténation, dans le deuxième stade, on envoie plusieurs messages de demande parallèles et en ce qu'on rassemble en un message de réponse commun les plusieurs messages de réponse correspondants dans le composant (BN, ..., C-6) d'automatisation envoyant les messages de demandes parallèles.

6. Procédé suivant l'une des revendications précédentes,
**caractérisé**
**en ce que** dans le cas dans lequel le message de demande atteint dans la concaténation un dernier des composants (c-5, c-6) d'automatisation, celui-ci répond par un message de réponse dans le sens contraire à la concaténation.

7. Procédé suivant l'une des revendications précédentes,
**caractérisé**
**en ce que** par un dispositif local d'analyse de l'un des composants (BN, ..., C-6) d'automatisation dans le cas dans lequel à l'aide des nombres caractéristiques locaux une cause d'une perturbation du déroulement est prévisible dans l'avenir, on envoie un message de première alerte à au moins un voisin des composants (BN, ..., C-6) d'automatisation.

8. Procédé suivant l'une des revendications précédentes,
**caractérisé**
**en ce que** les messages de demande et les messages de réponse comprennent au moins dans le cas de bifurcation respectivement un jeton univoque.

9. Procédé suivant l'une des revendications précédentes,
**caractérisé**
**en ce que** dans le cas d'une modification de la topologie de l'agencement d'automatisation industrielle, on effectue à nouveau au moins le premier stade sur chacun des composants (BN, ..., C-6) d'automatisation.

10. Système comprenant un composant (BN, ..., C-6) d'automatisation pour le fonctionnement dans un agencement d'automatisation industriel ayant une pluralité de composants (BN, ..., C-6) d'automatisation concaténés,
**caractérisé**
**en ce que** le composant (BN, ..., C-6) d'automatisation a un dispositif d'analyse, dans lequel le dispositif d'analyse est agencé,
- pour déterminer au moins un composant (BN, ..., C-6) d'automatisation précédant et au moins suivant dans la concaténation,
- envoyer un message de demande à au moins un deuxième composant (BN, ..., C-6) d'automatisation précédant ou suivant dans la concaténation en fonction du type de la perturbation du déroulement,
- dans le cas d'un message de demande reçue, décider par le dispositif d'analyse à l'aide de nombres caractéristiques mis en mémoire ou mesurés localement, si ce composant (BN, ..., C-6) d'automatisation est à l'origine de la perturbation du déroulement, dans lequel dans l'affirmative, un message de réponse est envoyé au composant (BN, ..., C-6) d'automatisation demandeur et dans le cas de la négative, le composant (BN, ..., C-6) d'automatisation est agencé pour envoyer ce même message de demande ou un autre demande de message à au moins un autre composant (BN, ..., C-6) d'automatisation, le précédant ou le suivant,
- acheminer respectivement un message de réponse reçue au composant (BN, ..., C-6) d'automatisation dont le composant (BN, ..., C-6) d'automatisation avait reçu un message de demande lui appartenant, et
- dans le cas dans lequel il était l'envoyeur d'origine du message de demande, à l'aide du contenu du message de réponse lui appartenant, mettre à disposition ou émettre une information sur celui du composant (BN, ..., C-6) d'automatisation à l'origine de la perturbation du déroulement.
